# EUROPEAN PATENT SPECIFICATION

(11) **EP 1 749 040 B1**
(45) Date of publication and mention of the grant of the patent: **31.03.2010**
(21) Application number: 05749522.8
(22) Date of filing: 11.05.2005
(51) Int. Cl.: C08G 63/20, C08G 63/12, C08G 63/50, C09D 167/02

(54) **WATER REDUCIBLE POLYESTER RESIN COMPOSITIONS WITH MIXED IONIC/NONIONIC STABILIZATION**
WASSERVERDÜNNBARE POLYESTERHARZZUSAMMENSETZUNGEN MIT GEMISCHTER IONISCH/NICHTIONISCHER STABILISIERUNG
COMPOSITIONS DE RESINE POLYESTER REDUCTIBLES DANS L'EAU A STABILISATION MIXTE IONIQUE/NON IONIQUE

(30) Priority: 15.05.2004 US 845701
(43) Date of publication of application: 07.02.2007
(73) Proprietor: E.I. DU PONT DE NEMOURS AND COMPANY, Wilmington, DE 19898 (US)
(72) Inventor: MEYER, Walter, C., New Bern, North Carolina 28560 (US); UHLIANUK, Peter W., Romeo, Michigan 48065 (US); VON BERGE, Robert G., Bear, Delaware 19701 (US)
(74) Representative: DuPont Performance Coatings Biering/Blum/Kimpel
(86) International application number: PCT/US2005/016587
(87) International publication number: WO 2005/116109

(56) References cited:
- WO-A-01/53363
- US-A- 3 379 548
- US-A1- 2002 013 404

## Description

### TECHNICAL FIELD

The present invention is directed to aqueous coating compositions comprising water reducible polyester resin, particularly water soluble or dispersible polyester resin having mixed ionic and nonionic stabilization prepared by random condensation polymerization.

### BACKGROUND OF THE INVENTION

Aqueous or waterborne coating compositions are widely used to coat automobiles and trucks as these compositions generally meet stringent environmental regulations. Exemplary of prior patents disclosing such coatings are U.S. Pat. Nos. 4,403,003 and 4,539,363, both issued to Backhouse. Typically, these coatings contain a latex as the main film forming component, a crosslinking agent, additives, and pigments. Other non-latex resins are also oftentimes added to improve adhesion and chip resistance of the coating. Polyester resins are especially helpful when employed for adhesion and chip properties, but can have several drawbacks.

Conventional amine salt stabilized polyesters require sufficient acid numbers for adequate aqueous stability. Unfortunately, this results in increased high shear viscosity properties, which have a negative impact on coating application properties. In order to achieve acceptable application, further dilution with an organic solvent becomes necessary, thereby lowering the spray solids and increasing the VOC (volatile organic compound) content of the composition. Further, low acid number polyester dispersions with good application properties are available, but these materials, as described below, often impair the "metallic glamour" of the coating.

It is well known in the paint industry to employ coating compositions which contain light reflecting metallic pigments. These are referred to as "metallic glamour" finishes whereby the apparent color of the coating varies at different viewing angles, thus possessing an attractive and pleasing color effect (this is also referred to as " two-tone" or "flop" effect). This effect is primarily attributable to the orientation of the aluminum or mica flakes in the paint film. When added to a coating composition, the commercially available low acid number polyester resins prepared by conventional polymerization techniques do not provide the rheology properties needed for proper flake orientation, and hence, impair the overall "two-tone" effect.

Polyesters stabilized with nonionic polyalkylene glycol segments alone have also been tried. However, the presence of nonionic constituents in a finish formed from such an aqueous coating composition containing the same tend to cause defects such as water spotting and poor resistance to humidity.

US 2002/0013404 A1 discloses a branched, low acid number hydroxyl-functional polyester resin comprising a reaction product of a polyalkylene glycol monoalkyl ether having a number average molecular weight of 500 to 3000, polycarboxylic acid and polyhydric alcohol. Together with organic hydrophobic polyisocyanate crosslinker the polyester resin can be used as a binder composition of an aqueous coating composition.

### SUMMARY OF THE INVENTION

The present invention is directed to an aqueous coating composition, useful for coating a substrate, which composition comprises an aqueous carrier comprising at least 40% water and a film-forming binder, wherein said binder contains at least one water reducible polyester resin having mixed ionic and nonionic stabilization, wherein said polyester resin is the reaction product of
(a) from 1 to 25% by weight of a polyethylene glycol monoalkyl ether with a number average molecular weight less than 1200;
(b) from 40 to 65 % by weight of one or more polycarboxylic acids;
(c) from 35 to 60% by weight of one or more polyhydric alcohols; and
wherein said polyester resin has an acid number from 2 to 30 (mg KOH/g resin solids), and wherein the film-forming binder further comprises an acrylic-based latex resin and an alkylated melamine formaldehyde resin. The polyester resin has an acid number from 2 to 30, a number average molecular weight from 1,000 to 10,000, and may be prepared in a single stage polymerization process. The polyethylene glycol monoalkyl ether component may be represented by the formula:

H(OX)ₙ-OR

where X is ethylenyl, n is an integer of 7 to 25, and R is an alkyl group of I to 4 carbon atoms.

Further, the invention claims an article coated with a dried and cured layer containing an aqueous coating composition of this invention.

### DETAINED DESCRIPTION OF THE INVENTION

As used in this specification, the following terms have the following definitions, unless the context clearly indicates otherwise. "Water reducible" means the material is soluble in water or is dispersible in water after neutralization. "GPC weight average (Mw) or GPC number average (Mn) molecular weight" means Mw and Mn molecular weights of resins obtained by using gel permeation chromatography utilizing polystyrene as the standard and tetrahydrofuran as the carrier solvent. "Water miscible solvents" are those solvents that are completely or substantially soluble in water. "Low acid number" is defined as an acid number in the range from 2 to 30 (mg KOH / g resin solids), as determined by typical analytical techniques. "Latex" or "latex resin" refers to a dispersion of a water-insoluble resin which may be prepared by conventional polymerization techniques such as, for example, by emulsion polymerization. "Crosslinkable" and "crosslinking" refer to the formation of new chemical bonds between existing polymer chains, and "curing" refers to the crosslinking resins after application to the substrate. The phrase "conventional polymerization process" means any polymerization process or reaction which predominantly gives a random resin or polymer.

The present invention is directed to aqueous coating compositions comprising an aqueous carrier, and film-forming binder containing a low acid number mixed ionic / nonionic stabilized polyester resin.

The polyester resins may be successfully prepared by conventional polymerization processes. In one embodiment, a single step polymerization process is used.

The polyester resins are prepared by conventional condensation polymerization techniques using diols, triols and higher polyhydric alcohols known in the art with conventional polycarboxylic acids or anhydrides thereof, in various proportions. At any time during the polymerization process, such as at the beginning, end, or middle, polyethylene glycol monoalkyl ether is also added with the forgoing monomers. The preferred approach of making the polyester resin, however, involves simultaneously adding a polyethylene glycol monoalkyl ether with the other monomers at the beginning of the polymerization process, thus making possible a single step conventional polymerization process. Polymerization is continued until the desired acid number and molecular weight are reached. This is a simpler approach than the common two step practice where a polyester resin is prepared in a first step, followed by second reaction step with a chain extending monomer, such as trimellitic anhydride, to achieve desired molecular weight properties.

Examples of suitable polycarboxylic acids include, but are not limited to, aromatic, aliphatic, and cycloaliphatic carboxylic acids, such as 1,4-cyclohexane dicarboxylic acid, 1,3-cyclohexane dicarboxylic acid, hexahydro-4-methylphthalic acid; tetrahydrophthalic acid, phthalic acid, isophthalic acid, terephthalic acid, trimellitic acid, adipic acid, azelaic acid, sebasic acid, succinic acid, maleic acid, glutaric acid, malonic acid, pimelic acid, suberic acid, fumaric acid, itaconic acid, and the like. Anhydrides of the above acids, where they exist can also be employed and are encompassed by the term "polycarboxylic acids".

The diols, triols, and higher polyhydric alcohols are generally known. Examples include trimethylolpropane, trimethylolethane, tris(hydroxyethyl) isocyanurate, glycerine, and pentaerythritol, and dihydric alcohols or diols such as neopentyl glycol, dimethylol hydantoin, ethylene glycol, propylene glycol, 1,4-butylene glycol, diethylene glycol, dipropylene glycol, 1,4- cyclohexane dimethanol, Esterdiol 204 (trademark of Union Carbide), 1,3- propane diol, 1,6-hexanediol, dimethylol propionic acid, and the like.

In one embodiment, the polyester resin contains from 1 to 25% by weight of a polyethylene glycol monoalkyl ether component with a number average molecular weight from 300 to 800, from 40 to 65 % by weight of an acid functional monomer, or mixture of acid functional monomers, and from 35 to 60% by weight of a hydroxy functional monomer, or mixture of hydroxy functional monomers. The resultant polyester resins are characterized by a number average molecular weight from 1,000 to 10,000, an acid number in the range from 2 to 30 (mg KOH / g resin solids), preferably from 3 to 20, and a hydroxyl number of 50 to 200 (mg KOH/g resin solids), preferably from 65 to 130, which after neutralizing with an amine or an inorganic base such as ammonium hydroxide or sodium hydroxide, are dispersible in water.

A particularly useful low acid number water dispersible polyester resin composition has a monomer content of 29.9 / 10.5 / 8.7 / 10.0 / 10.0 / 30.9 parts by weight of neopentyl glycol / trimethylol propane / methoxy polyethylene glycol (Carbowax® MethoxyPEG 550 from Dow Chemical Corp.) / isophthalic acid / phthalic anhydride / adipic acid, reduced to a resin solids of 80% in a 1:1 weight ratio of n-butanol and dipropylene glycol methyl ether solvents.

The above described polyester resins are useful to produce aqueous coatings by blending with other suitable components in accordance with paint formulation techniques known to those skilled in the art. It has been found that improved aqueous or waterborne coating systems are obtained by using these polyesters in combination with other binder components, preferably a latex resin and a crosslinking resin.

When the polyester resin is used to form an aqueous coating composition, for example, typically available amines that can be used to fully or partially neutralize the acid functional groups include AMP (2-amino-2-methyl-1-propanol), dimethyl-AMP, amino methyl propanol, amino ethyl propanol, dimethyl ethanol amine, triethylamine and the like. A preferred amine is AMP.

The aqueous coating compositions of this invention are preferably pigmented basecoat containing solid color pigments or metallic or pearl flake pigments or mixtures thereof over which a variety of clearcoats, such as water or organic solvent based or powder clearcoats, can be applied. The coating composition depending on the presence of pigments also can be used as a primer, primer surfacer, monocoat, and/or clearcoat. The coating composition can be applied with conventional spray equipment and dried at ambient or slightly elevated temperatures. The resulting finish has excellent adhesion to other coating layers and chip resistance which are desirable properties for automotive finishes. The resulting finish also offers a significant improvement over conventionally used aqueous automotive finishes in terms of appearance such as metallic glamour and spray solids (low solvent).

The aqueous coatings of the present invention contain a latex of an acrylic-based resin, otherwise known as an acrylic microgel dispersion (as described in Backhouse U.S. Patent 4,403,003 issued Sep. 6, 1983 and Backhouse U.S. Patent 4,539,363 issued Sep. 3, 1985). As is well known to those skilled in the art, acrylic lattices are commercially available from Avecia, Rohm & Haas and others, for example Neocryl® latex (Neoresins Division of Avecia, Wilmington, MA, Wilmington, DE). These lattices are stable dispersions in water, typically as a dispersed latex resin, with an average particle size diameter of 10 nm to I micron, preferably 20 to 400 nm. The coating compositions contain 10-70%, more typically 15-40% by weight of binder, and 30-90%, more typically 60-85% by weight, of an aqueous carrier. The carrier is at least 50% water, and in one embodiment, 75 to 95% water.

To form a curable coating composition, which will crosslink under elevated baking temperatures of 60-180°C for 5-60 minutes, there may be comprised 10 to 40%, preferably 15 to 30% by weight, based on the weight of the binder, of a water-soluble or water dispersible alkylated melamine formaldehyde crosslinking resin, or mixture of resins, wherein the alkyl groups contains 1-4 carbon atoms on the alkylated group. Monomeric or polymeric alkylated melamine formaldehyde crosslinking resin may be used. A particularly useful melamine formaldehyde crosslinking resin is CYMEL® 303, a monomeric methylated melamine available from Cytec Industries.

In order to enable adequate bake curing, the coating compositions containing alkylated melamine formaldehyde crosslinking resins, preferably contain from 0.1 to 2.0%, based on the weight of binder, of a strong acid catalyst, or amine salt thereof. Organic sulfonic acids, or the amine salts thereof, are preferred catalysts: A particularly useful catalyst is amino-methyl propanol blocked dodecyl benzyl sulfonic acid, available as NACURE® 5225 from King Industries. Phosphoric acid, and salts thereof, are also effective catalysts.

The aqueous coatings of this invention may contain color-giving and/or effect-giving pigments and, optionally, fillers. Examples of color-giving inorganic or organic pigments and fillers are titanium dioxide, micronized titanium dioxide, iron oxide pigments, carbon black, -azo pigments, phthalocyanine pigments, quinacridone pigments, pyrrolopyrrole pigments, perylene pigments. Examples of filler pigments particularly useful for primers are silicon dioxide, barium sulfate, micronized mica, talcum, kaolin, chalk, layered silicates, and the like.

Examples of effect-giving pigments are metal pigments, for example flakes of aluminum, copper or other metals, interference pigments, such as, for example, metal-oxide-coated metal pigments, for example titanium- dioxide-coated aluminum, coated mica or pearl flakes, such as, for example, titanium-dioxide-coated mica, graphite effect pigments, plate-like iron oxide, plate-like copper phthalocyanine pigments.

Effect pigments are generally used in the form of a commercial aqueous or non-aqueous paste, organic solvents and additives, preferably water-dilutable organic solvents and additives, are optionally added thereto, and the whole is then mixed with aqueous binder, with shearing. Powdered effect pigments may first be processed with preferably water-dilutable organic solvents and additives to form a paste.

Color-giving pigments and/or fillers may be milled, for example, in a portion of the aqueous binder. Milling may preferably also take place in a special water-dilutable paste resin. Milling may be carried out in conventional units known to those skilled in the art. The remainder of the aqueous binder or of the aqueous paste resin is then added to produce the finished coloring pigment mill base.

The aqueous coatings of the invention may contain further additives in amounts conventionally employed in the art, for example from 0.1 to 5 wt. %, based on the weight of the binder. Examples of such further additives are neutralizing agents, antifoaming agents, wetting agents, adhesion- promoting substances, catalysts, flow agents such as fumed silica or sheet silicate particles, anti-pitting agents, ultraviolet light stabilizers and thickeners such as, for example, synthetic resins having groups that are ionic and/or have an associative action, such as poly(meth)acrylamide, poly(meth)acrylic acid, hydrophobically modified ethoxylated polyurethanes or polyacrylates, crosslinked or uncrosslinked polymer microparticles, alkali swellable emulsions (such as Acrysol® ASE-60 from Rohm & Haas Co., and the like), and clay materials (such as the Bentone® materials available Elementis Specialties, and the like).

The aqueous coatings of this invention also typically contain organic solvents in the aqueous carrier to facilitate atomization and spray application, as well as coalescence of the applied paint particles. Examples of suitable solvents are those which are at least partially water-miscible, such as, but not limited to, mono- or polyhydric alcohols (for example iso-propanol, n-propanol, n-butanol, hexanol, and the like) glycol ethers (for example diethylene glycol alkyl ether, dipropylene glycol alkyl ether, each having alkyl residues comprising one to six carbon atoms, ethoxypropanol, butyl glycol, and the like), N-alkylpyrrolidones (for example N-methylpyrrolidone and the like), propylene glycol ethers or esters (for example propylene glycol dimethyl ether, dipropylene glycol mono- or di-C₁-C₆-alkyl ethers, ethoxypropanol, propoxypropanol, butoxypropanol, methoxypropyl acetate, ethoxypropyl acetate, and the like), ethylene glycol or propylene glycol (and their dimers or trimers), ketones (for example cyclohexanone, and the like), and mineral spirits.

The coating compositions of this invention can be used to provide coatings on suitable substrates such as wood and reconstituted wood products, concrete, asphalt, fiber cement, stone, marble, clay, glass, plastics (for example, polystyrene, polyethylene, ABS, polyurethane, polyethylene terphthalate, polybutylene terphthalate, polypropylene, polyphenylene, polycarbonate, polyacrylate, PVC, NORYL®, and polysulfone), paper, cardboard, and metal (ferrous as well as non-ferrous). Preferably, the coating compositions of this invention are used to provide aqueous coatings for automobiles and trucks metal and plastic substrates.

Coating compositions of this invention have excellent properties when applied over variety of metallic or non-metallic substrates, either alone, or in conjunction with other coating materials. Preferably, the coating compositions are applied over primed substrates. Other substrates include, but are not limited to, previously topcoated substrates, cold rolled steel, phosphatized steel, and steel coated with conventional primers by electrodeposition. The coating compositions may be used as pigmented monocoats, as clear coats, as the pigmented base coat of a clear coat/base coat or as both the clear coat and the base coat. The coating compositions of this invention are particularly useful in forming metallic glamour finishes.

Coating compositions of this invention can be applied by conventional techniques such as rotary bell application, pneumatic air spraying, electrostatic spraying, dipping, brushing, flowcoating and the like. The preferred techniques are spraying and electrostatic spraying in one or more operations. In automotive coating applications, the basecoat composition is applied to form a coating 2.5-76.2 µm (0.1-3.0 mils) thick and then dried to a tack-free state, preferably flash dried for a short period before the clearcoat is applied thereon. In OEM finishes the basecoat/clearcoat finish is then typically baked at 60 - 150°C for 15 to 30 minutes. The present invention is also applicable to non-baking, or low baking, refinish systems, as will be readily apparent by those skilled in the art.

The customary technique used to apply the clearcoat over the basecoat by means of a "wet-on-wet" application, wherein the clearcoat is applied to the basecoat without curing the basecoat. The coated substrate is then heated for a predetermined time period to allow simultaneous curing of the base and clearcoats. Application over water-bome basecoat normally prefers some degree of dehydration of the basecoat by exposure to ambient or heated air before application of the clearcoat. Dehydration according to the invention is important in order that the finished two-layer coating meets the demands made both of the technological properties, such as, for example, adhesion and resistance to the impact of stones, and of the optical properties, such as, for example, color shade, the development of special effects, and the appearance. After application of the clearcoat, the substrate is typically flashed again and finally baked until the film is cured, or at least partially cured, at 100-150°C for 15-30 minutes to produce the coated article. The basecoat and clearcoat are preferably deposited to have thicknesses of 2.5-63.5 µm (0.1-2.5 mils) and 25.4-76.2 µm (1.0-3.0 mils), respectively.

The following examples are presented to illustrate the preparation and characteristics of polyester resins and coatings of this invention. All parts and percentages are on a weight basis unless otherwise indicated. All molecular weights disclosed herein are determined by GPC (gel permeation chromatography) using a polystyrene standard. These examples are presented to illustrate further various aspects of the present invention, but are not intended to limit the scope of the invention in any respect.

### EXAMPLES

### EXAMPLE 1

An aqueous acrylic latex resin was prepared as illustrated in the following example. Constituents were charged into a polymerization vessel equipped with a stirrer, a heat source, a thermometer, a reflux condenser and a nitrogen inlet and polymerizing under a nitrogen atmosphere:

| Ingredients | Parts by Weight |
|---|---|
| Portion 1 | |
| Water | 26.62 |
| Ammonium Alkyphenoxy Polyethoxysulfate (RHODAPEX^{®} CO-436 from Rhodia Inc.) | 0.21 |

| Portion 2 | |
|---|---|
| Ammonium Alkyphenoxy Polyethoxysulfate | 0.17 |
| Allyl Methacrylate | 0.44 |
| Water | 10.51 |
| Methyl Methacrylate | 2.43 |
| n-Butyl Acrylate | 11.72 |

| Portion 3 | |
|---|---|
| Water | 1.61 |
| Ammonium Alkyphenoxy Polyethoxysulfate | 0.05 |

| Portion 4 | |
|---|---|
| Ammonium Alkyphenoxy Polyethoxysulfate | 0.18 |
| Allyl Methacrylate | 0.36 |
| Water | 10.49 |
| Methyl Methacrylate | 6.46 |
| n-Butyl Acrylate | 5.21 |

| Portion 5 | |
|---|---|
| Ammonium Alkyphenoxy Polyethoxysulfate | 0.15 |
| Hydroxy Ethyl Acrylate | 0.79 |
| Methacrylic Acid | 0.55 |
| Water | 8.11 |
| Methyl Methacrylate | 3.40 |
| n-Butyl Acrylate | 3.12 |

| Portion 6 | |
|---|---|
| Water | 6.65 |
| Amino Methyl Propanol (AMP^{®}-95 from Angus Chemical Co.) | 0.60 |
| Oxazolidine-Heterocyclic Amine (NUOSEPT^{®} 145 from ISP Technologies) | 0.17 |
| TOTAL | 100.00 |

Portion I constituents were charged to the polymerization vessel, heated to 83.3°C (182°F), and held at temperature. Portion 2 constituents were premixed thoroughly, and slowly added to portion 1 over a 90 minute period, while maintaining a temperature of 83.3°C (182°F). The resultant solution was then held at temperature for 20 minutes. Portion 3 constituents were then premixed and added to the vessel. Portion 4 constituents were then premixed for 45 minutes, fed into the polymerization vessel at a temperature of 83.3°C (182°F) over a 60 minute period, and then held at temperature for 60 minutes. Portion 5 constituents were thoroughly premixed and added to the polymerization vessel at a temperature of 83.3°C (182°F) over a 60 minute period, and then held at temperature for 60 minutes. Portion 6 constituents were premixed and added to the vessel to adjust pH to 8.3 to 8.7.

The resultant aqueous acrylic latex resin had a measured weight percent solids of 35%, and pH of 8.5.

### EXAMPLE 2

A mixed ionic / nonionic stabilized polyester resin was prepared as illustrated in the following example.

To prepare a mixed ionic/non-ionic stabilized polyester resin in a single stage polymerization process, the following ingredients were charged to a four-neck flask fitted with a condenser and water separator, stirrer, and thermometer. The batch was the heated to 230°C while removing and held at that temperature until the acid number reached 6 to 8.

| Ingredient | Parts by Weight |
|---|---|
| Neopentyl Glycol | 242.0 |
| Adipic Acid | 283.1 |
| Methoxy Polyethylene Glycol (Carbowax^{®} MethoxyPEG 550 from Dow Chemical Corp.) | 67.5 |
| Trimethylol Propane | 86.6 |
| Phthalic Anhydride | 66.9 |
| isoPhthalic Acid | 67.0 |

The above resin was then cooled to 100°C, and the following solvents were added to thin the resin:

| | |
|---|---|
| Dipropylene Glycol Methyl Ether Solvent (DOWANOL^{®} DPM from Dow Chemical Corp.) | 84.7 |
| n-Butanol Solvent | 84.7 |

The resultant polyester resin had a viscosity of Z2 on the Gardner Holdt scale, and measured weight percent solids of 80%.

### EXAMPLE 3

A block copolymer used to produce pigment dispersions was prepared as illustrated in the following example. To a 5-liter flask equipped with an agitator, condenser, heating mantle, nitrogen inlet, thermocouple and an addition port 1600.0 g of tetrahydrofuran, 3.8 g of p-xylene were added. 0.6 ml of a 1.0 M solution of a catalyst of tetrabutyl ammonium m-chlorobenzoate in acetonitrile were added. 32.5 g of a 0,140 M solution of an initiator of 1,1-bis(trimethylsiloxy)-2-methyl propene were injected into the flask. Feed 1 of 0.6 ml of a 1.0 M solution of tetrabutyl ammonium m-chlorobenzoate in acetonitrile was started and added over 200 minutes. Feed U (trimethylsilyl methacrylate, 265.0 g (1.67 M), butyl methacrylate, 298.0 g (2.10 M), methyl methacrylate, 140.0 g (1.40 M), and trimethylsiloxyethyl methacrylate, 141.0 g (0.70 M) was started at 0.0 minutes and added over a 45 minute period. One hundred minutes after Feed II was completed (over 99% of the monomers had reacted) Feed III (benzyl methacrylate, 616.0 g (3.46 M), and dimethyl amino ethyl methacrylate, 154.0 g (0.980 M) was started and added over 30 minutes. At 400 minutes, 150 g methanol was added to the resulting reaction mixture to quench the reaction and deblock the hydroxy and acid monomers and solvent distillation was started. During the first stage of distillation, 400.0 g of solvent were removed. 100.0 g of methanol were added and an additional 200.0 g of solvent were distilled off.

The resulting polymer solution had a 50% solids content and the polymer had the following composition benzyl methacrylate/dimethyl amino ethyl methacrylate//butyl methacrylate/methyl methacrylate/hydroxy ethyl methacrylate/methacrylic acid in a weight ratio of 25/15//15/101//5/12 and a number average molecular weight of 10,300.

### EXAMPLE 4

A carbon black pigment dispersion was prepared by using a conventional high speed media mill to disperse the above described carbon black pigment in the above prepared block copolymer which is neutralized with AMP-95. The resulting carbon black pigment dispersion had the following composition and had a solids content of 20.5%:

| Ingredients | Parts by Weight |
|---|---|
| De-ionized water | 67.90 |
| Surfactan t(SURFYNOL^{®} 104 from Air Products & Chem icals) | 0.30 |
| Carbon black pigment (Columbian 5000 Ultra II Powder) | 10.00 |
| Block copolymer from Example 3 | 0.00 |
| 2-Amino-Methyl Propanol (AMP^{®}-95 from Angus Chemical Co.) | 1.80 |

### EXAMPLE 5

A white pigment dispersion was prepared in the following example. A random acrylic resin of methyl methacrylate (MMA), butyl acrylate (BA), acrylic acid (AA) and mercapto ethanol (2-MERE) in a ratio of 54. 9/33.6/9.8/1.7 having a weight average molecular weight of 8,000, a number average molecular weight of 4,000 and a polydispersity of 2, was formulated into a white pigment dispersion using a conventional mill process in which 60 parts by weight of white titanium dioxide pigment (DuPont TI-PURE R-960), 10 parts by weight of the above random acrylic resin, 4 parts by weight of butyl cellosolve, 0.05 parts by weight AMP- 95 (2-Amino Methyl Propanol), and 25.09 parts by weight water were milled to uniformly disperse the pigment in the acrylic resin.

### EXAMPLE 6

An aqueous aluminum flake slurry was prepared in the following example. To prepare the slurry, 6.4 parts by weight mineral spirits (ISOPAR H solvent from Exxon-Mobil Co.), 14.6 parts by weight butyl cellosolve, 15.8 parts by weight aluminum paste (SSP-572 from Silberline Mfg. Co. Inc.), 3.6 parts by weight of a known passivator (Lubrizol® 2062 from Lubrizol Corp.), and 0.6 parts by weight AMP- 95 (2-Amino Methyl Propanol) were premixed thoroughly. Then 38.3 parts by weight of the aqueous acrylic latex resin of Examples 1 and 20.6 parts by weight de-ionized water were added to complete the aluminum flake slurry.

### COATING EXAMPLES 1 - 3

The following coating examples, based upon a mixed ionic / nonionic stabilized polyester resin, were prepared by mixing the following ingredients, yielded the below wet paint properties:

| Ingredient | Coating Example 1 Black Aqueous Basecoat | Coating Example 2 White Aqueous Basecoat | Coating Example 3 Silver Aqueous Basecoat |
|---|---|---|---|
| Aqueous Acrylic Latex of Example 1 | 371.6 | 211.4 | 108.5 |
| Water | 173.4 | 126.7 | 357.8 |
| Aqueous Polyurethane Dispersion (SANPRENE^{®} UX-5100A from Sanyo Chemical Industries Ltd.) | -- | 58.2 | 39.2 |
| Propylene Glycol Butyl Ether (ARCOSOLV PTB from Lyondell Chemical Co.) | 21.7 | 21.7 | -- |
| Butyl Cellosolve Solvent | -- | -- | 14.4 |
| Mineral Spirits (ISOPAR^{®} H SOLVENT from Exxon-Mobil Co.) | 31.8 | 31.8 | 11.1 |
| N-Methyl-2-Pyrrolidone | 16.9 | 20.2 | 8.5 |
| Dipropylene Glycol Methyl Ether (DOWANOL^{®} DPM from Dow Chemical Co.) | 31.0 | 9.4 | -- |
| Amine Blocked Dodecyl Benzyl Sulfonic Acid / iso Propanol Solution (NACURE^{®} 5225 from King Industries) | 4.8 | 7.0 | 5.0 |
| Melamine Formaldehyde Resin (CAMEL^{®} 301 from Cytec Ind.) | 46.6 | -- | -- |
| Melamine Formaldehyde Resin (MAPRENAL MF 900W/95 from Surface Specialties Inc.) | -- | 46.2 | -- |
| Melamine Formaldehyde Resin (CYMEL^{®} 303 from Cytec Ind.) | -- | -- | 30.8 |
| Amino-methyl Propanol (AMP^{®}-95 from Angus Chemical Co.) | 1.7 | 5.5 | 1.9 |
| Mixed ionic / nonionic stabilized polyester resin of Example 2 | 58.1 | 85.1 | 38.3 |
| Black Pigment Dispersion of Example 4 | 77.4 | -- | -- |
| White Pigment Dispersion of Example 5 | -- | 377.9 | -- |
| Silver Pigment Dispersion of Example 6 | -- | -- | 38.3 |
| Acrylic Emulsion Resin (ACRYSOL^{®} ASE-60 Thickening Agent from Rohm & Haas Co.) | 13.3 | 13.0 | 17.3 |
| Water | 126.7 | 64.0 | -- |
| TOTAL | 970.3 | 1071.0 | 849.2 |
| | | | |

| Wet Paint Properties | | | |
|---|---|---|---|
| pH | 8.34 | 8.10 | 8.11 |
| #4 Ford Cup Viscosity @ 77°F | 45 sec. | 62 sec. | 58 sec. |
| Weight percent Solids | 24.6% | 42.2% | 20.8% |

The aqueous basecoats examples were applied at conventional film builds (15.2-25.4 µm, 0.6 to 1.0 mils) over previously primed commercially available e-coated test panels. The basecoated panels were dehydrated in a pre-bake, and then clearcoated with 45.7-55.9 pm (1.8 to 2.2 mils) of a commercially available solventborne one-component etch resistant clearcoat (DuPont Generation® IVESW). The composite basecoat/clearcoat coatings were then baked for 30 minutes at 129.4°C (265°F). The resultant cured basecoat/clearcoated panels were tested for such film properties as gravelometer chip resistance per test method SAE J400, 20° gloss before and after humidity exposure, DOI as measured with a Hunter Dorigon DOI meter before and after humidity exposure, and adhesion before and after humidity exposure. Humidity exposure conditions were 96 hours at 37.8°C (100°F) and 100% relative humidity. The dry initial adhesion (dry hatch) and wet adhesion after humidity, using the X-hatch test method, were both evaluated based upon a rating system from 0 (no adhesion) to 10 (perfect adhesion). Results are summarized as follows:

| Test Method | Coating Example 1 Black Aqueous Basecoat | Coating Example 2 White Aqueous Basecoat | Coating Example 3 Silver Aqueous Basecoat |
|---|---|---|---|
| Chip resistance | 5B | 6B | 5B |

| 20° Gloss | | | |
|---|---|---|---|
| before humidity | 88 | 89 | 92 |
| after humidity | 86 | 86 | 90 |

| DOI | | | |
|---|---|---|---|
| before humidity | 92 | 93 | 88 |
| after humidity | 92 | 94 | 89 |

| X-Hatch Adhesion | | | |
|---|---|---|---|
| before humidity | 10 | 10 | 10 |
| after humidity | 10 | 10 | 10 |

| Blistering | | | |
|---|---|---|---|
| before humidity | None | None | None |
| after humidity | None | None | None |

## Claims

1. An aqueous coating composition, useful for coating a substrate, which composition comprises an aqueous carrier comprising at least 40% water and a film-forming binder, wherein said binder contains at least one water reducible polyester resin having mixed ionic and nonionic stabilization, wherein said polyester resin is the reaction product of
(a) from 1 to 25% by weight of a polyethylene glycol monoalkyl ether with a number average molecular weight less than 1200;
(b) from 40 to 65 % by weight of one or more polycarboxylic acids;
(c) from 35 to 60% by weight of one or more polyhydric alcohols; and
wherein said polyester resin has an acid number from 2 to 30 (mg KOH/g resin solids), and wherein the film-forming binder further comprises an acrylic-based latex resin and an alkylated melamine formaldehyde resin..

2. The aqueous coating composition of claim 1, wherein the polyethylene glycol monoalkyl ether of said polyester resin is a polyethylene glycol monomethyl ether with a number average molecular weight from 300 to 800.

3. The aqueous coating composition of claim 1, wherein said alkylated melamine formaldehyde resin is a monomeric methylated melamine formaldehyde resin.

4. The aqueous coating composition of claim 1 which further comprises an organic acid catalyst.

5. The aqueous coating composition of claim 4, wherein said acid catalyst is an organic sulfonic acid or an amine salt thereof

6. The aqueous coating composition of claim 5, wherein said acid catalyst is amine salt of dodecyl benzyl sulfonic acid.

7. An article coated with a dried and cured layer of the composition of claim 1.

8. A finished product manufactured from the coated article of claim 7.

## Patentansprüche

1. Wäßrige Beschichtungszusammensetzung, verwendbar zum Beschichten eines Substrats, wobei die Zusammensetzung einen wäßrigen Träger mit mindestens 40% Wasser und ein filmbildendes Bindemittel aufweist, wobei das Bindemittel mindestens ein durch Wasser reduzierbares Polyesterharz mit gemischter ionischer und nichtionischer Stabilisierung enthält, wobei das Polyesterharz das Reaktionsprodukt der folgenden Komponenten ist:
(a) 1 bis 25 Gew.-% eines Polyethylenglycolmonoalkylethers mit einem zahlengemittelten Molekulargewicht von weniger als 1200;
(b) 40 bis 65 Gew.-% einer oder mehrerer Polycarbonsäuren;
(c) 35 bis 60 Gew.-% einer oder mehrerer mehrwertiger Alkohole; und
wobei das Polyesterharz eine Säurezahl von 2 bis 30 (mg KOH/g Harzfeststoffe) aufweist, und wobei das filmbildende Bindemittel ferner ein Latexharz auf Acrylbasis und ein alkyliertes Melaminformaldehyd-Harz aufweist.

2. Wäßrige Beschichtungszusammensetzung nach Anspruch 1, wobei der Polyethylenglycolmonoalkylether des Polyesterharzes ein Polyethylenglycolmonomethylether mit einem zahlengemittelten Molekulargewicht von 300 bis 800 ist.

3. Wäßrige Beschichtungszusammensetzung nach Anspruch 1, wobei das alkylierte Melaminformaldehyd-Harz ein monomeres methyliertes Melaminformaldehyd-Harz ist.

4. Wäßrige Beschichtungszusammensetzung nach Anspruch 1, die ferner einen organischen Säurehärter aufweist.

5. Wäßrige Beschichtungszusammensetzung nach Anspruch 4, wobei der Säurehärter eine organische Sulfonsäure oder ein Aminsalz davon ist.

6. Wäßrige Beschichtungszusammensetzung nach Anspruch 5, wobei der Säurehärter ein Aminsalz von Dodecylbenzylsulfonsäure ist.

7. Gegenstand, der mit einer getrockneten und gehärteten Schicht der Zusammensetzung nach Anspruch 1 beschichtet ist.

8. Fertigprodukt, hergestellt aus dem beschichteten Gegenstand nach Anspruch 7.

## Revendications

1. Composition aqueuse de revêtement, utile pour revêtir un substrat, laquelle composition comprend un véhicule aqueux comprenant au moins 40% d'eau et un liant filmogène, ledit liant contenant au moins une résine polyester réductible dans l'eau à stabilisation mixte ionique et non ionique, ladite résine polyester étant le produit réactionnel de
(a) 1 à 25% en poids d'un éther monoalkylique de polyéthylèneglycol ayant un poids moléculaire moyen en nombre inférieur à 1200;
(b) 40 à 65% en poids d'un ou plusieurs acides polycarboxyliques;
(c) 35 à 60% en poids d'un ou plusieurs polyols; et
ladite résine polyester ayant un indice d'acide de 2 à 30 (mg de KOH/g de matières solides de résine), et le liant filmogène comprenant en outre une résine de latex à base acrylique et une résine de mélamine-formaldéhyde alkylée.

2. Composition aqueuse de revêtement selon la revendication 1, dans laquelle l'éther monoalkylique de polyéthylèneglycol de ladite résine polyester est un éther monométhylique de polyéthylèneglycol ayant un poids moléculaire moyen en nombre de 300 à 800.

3. Composition aqueuse de revêtement selon la revendication 1, dans laquelle ladite résine de mélamine-formaldéhyde alkylée est une résine de mélamine-formaldéhyde méthylée monomérique.

4. Composition aqueuse de revêtement selon la revendication 1 qui comprend en outre un catalyseur de type acide organique.

5. Composition aqueuse de revêtement selon la revendication 4, dans laquelle ledit catalyseur de type acide est un acide sulfonique organique ou un de ses sels d'amine.

6. Composition aqueuse de revêtement selon la revendication 5, dans laquelle ledit catalyseur de type acide est un sel d'amine de l'acide dodécylbenzylsulfonique.

7. Article revêtu d'une couche séchée et durcie de la composition selon la revendication 1.

8. Produit fini fabriqué à partir de l'article revêtu selon la revendication 7.
